# FASCICULE DE BREVET EUROPEEN

(11) **EP 3 257 224 B1**
(45) Date de publication et mention de la délivrance du brevet: **30.08.2023**
(21) Numéro de dépôt: 16707858.3
(22) Date de dépôt: 02.02.2016
(51) Int. Cl.: H04L 9/40

(54) **TECHNIQUE DE CONNEXION À UN SERVICE**
VERFAHREN ZUR VERBINDUNG MIT EINEM DIENST
TECHNIQUE FOR CONNECTING TO A SERVICE

(30) Priorité: 13.02.2015 FR 1551230
(43) Date de publication de la demande: 20.12.2017
(73) Titulaire: Orange, 92130 Issy-les-Moulineaux (FR)
(72) Inventeur: LAVEDRINE, Rémi, 92326 Chatillon Cedex (FR); WEENS, Franck, 92190 Meudon (FR); SACHET, Patrick, 92326 Chatillon Cedex (FR)
(86) Numéro de dépôt international: PCT/FR2016/050210
(87) Numéro de publication internationale: WO 2016/128645

(56) Documents cités:
- WO-A1-03/007571
- FR-A1- 2 839 832
- US-A1- 2011 030 043

## Description

L'invention se rapporte au domaine général des télécommunications.

L'invention concerne plus particulièrement une technique de connexion à un service d'un dispositif utilisateur.

Pour se connecter à un service, un utilisateur doit généralement renseigner un identifiant de connexion, comprenant un identifiant d'utilisateur et un mot de passe. L'identifiant de connexion permet à l'administrateur d'un service de gérer les droits d'accès d'un utilisateur associé à cet identifiant pour ce service. Un tel service peut par exemple correspondre à un service de réseau social, à un service de paiement, à un service de vente en ligne.

Ce type de connexion nécessite que l'utilisateur mémorise pour chaque service un identifiant de connexion et notamment un mot de passe. On constate que l'utilisateur choisit souvent un mot de passe identique pour accéder à une pluralité de services. Ceci diminue le niveau de sécurisation associé à une connexion avec mot de passe. Lorsque l'utilisateur choisit un mot de passe distinct pour chaque service, il devient alors complexe pour celui-ci de mémoriser la pluralité de mots de passe. Il peut alors les noter sur un papier, dans un fichier ou bien encore utiliser une application de gestion de mots de passe, afin de les retrouver. Il peut encore demander un nouveau mot de passe lorsqu'il souhaite se connecter. On comprend ainsi que pour l'utilisateur, une connexion à l'aide d'un mot de passe présente une complexité pour se connecter à un service et/ou soulève des problèmes de sécurité.

Les documents brevet WO03/007571 et US2011/030043 décrivent un procédé et un système, dans lequel le client reçoit d'un serveur d'authentification un jeton et le fournit à un serveur mettant en oeuvre un service.

Un des buts de l'invention est de remédier à des insuffisances/inconvénients de l'état de la technique et/ou d'y apporter des améliorations.

La présente invention est définie par l'objet des revendications indépendantes. Des modes de réalisation particuliers sont définis par les revendications dépendantes.

Selon un premier aspect, l'invention a pour objet un procédé de connexion à un service d'un dispositif utilisateur, ledit procédé comprenant :
- un envoi par le dispositif d'une requête de connexion audit service, un identifiant d'un utilisateur du dispositif auprès d'une entité de confiance étant associé à ladite requête ;
- une réception par ledit dispositif en provenance d'une entité de confiance d'une réponse à ladite requête, ladite réponse comprenant une donnée relative à un localisateur uniforme de ressource associé audit service et un code de connexion à usage unique ;
- un envoi par ledit dispositif d'une requête d'accès à une page du service dont l'adresse correspond à ladite donnée, le code de connexion reçu étant associé à ladite requête d'accès ;
- une connexion audit service pour un identifiant de service associé à l'identifiant d'utilisateur auprès de l'entité de confiance, suite à une validation du code de connexion par l'entité de confiance.

Corrélativement, le procédé de connexion à un service comprend pour un dispositif utilisateur :
- une réception par une entité de confiance en provenance du dispositif d'une requête de connexion audit service, un identifiant d'un utilisateur du dispositif auprès de l'entité de confiance étant associé à ladite requête ;
- un envoi au dispositif par l'entité de confiance d'une réponse à ladite requête, ladite réponse comprenant une donnée relative à un localisateur uniforme de ressource associé audit service et un code de connexion à usage unique ;
- une autorisation de connexion audit service pour l'identifiant de service associé à l'identifiant d'utilisateur auprès de l'entité de confiance, lorsqu'un code de connexion reçu, par l'entité de confiance en provenance d'un serveur mettant en oeuvre le service, en association avec une demande d'identifiant de service, est valide.

L'entité de confiance génère ainsi un code de connexion pour un utilisateur et pour un service. Ce code de connexion permet ainsi à l'entité de confiance d'identifier de manière unique l'utilisateur et le service requis. L'utilisateur doit ensuite uniquement demander un accès à une page du service en cliquant sur une donnée relative à un localisateur uniforme de ressources. La donnée relative à un localisateur uniforme de ressource correspond à une URL (pour « Uniform Ressource Locator »), codée sous la forme d'un schéma d'URL (« URL scheme » en anglais). Une URL est une chaîne de caractères combinant les informations nécessaires pour indiquer à un logiciel comment accéder à une ressource Internet. L'entité de confiance détermine alors grâce au code de connexion l'identifiant de service pour le service demandé associé à l'identifiant d'utilisateur. Le parcours client est très simplifié et sécurisé. L'utilisateur n'a pas besoin de mémoriser des identifiants de service et des mots de passe multiples.

L'identifiant d'utilisateur correspond par exemple à un numéro d'identification dans un réseau mobile ou fixe, à une adresse de courrier électronique.

La réponse est par exemple envoyée au moyen d'un message court ou bien d'un courrier électronique.

Les différents modes ou caractéristiques de réalisation mentionnés ci-après peuvent être ajoutés indépendamment ou en combinaison les uns avec les autres, aux étapes du procédé de connexion tel que défini précédemment.

Selon une caractéristique particulière du procédé de connexion, la réponse à la requête de connexion est adressée à une adresse de contact associée à l'identifiant d'utilisateur auprès de l'entité de confiance.

En cas d'une utilisation frauduleuse par un tiers de l'adresse de contact, l'utilisateur peut alors intervenir auprès de son opérateur de réseau ou de messagerie, afin d'invalider cette adresse de contact.

A titre d'exemple, lorsque le dispositif utilisateur est un terminal mobile, la déclaration effectuée auprès de son opérateur permet de bloquer l'envoi de la réponse si une connexion au service est tentée.

Dans un mode de réalisation particulier du procédé de connexion, l'adresse de contact est un numéro de téléphone permettant de joindre un utilisateur du dispositif.

Dans ce mode de réalisation, le dispositif utilisateur est par exemple un terminal mobile exécutant une application.

Dans un mode de réalisation particulier du procédé de connexion, l'adresse de contact est une adresse de courrier électronique associée à l'utilisateur du dispositif.

Dans ce mode de réalisation, le dispositif utilisateur est par exemple un ordinateur portable navigant sur un site Web.

Selon un deuxième aspect, l'invention concerne également un dispositif utilisateur comprenant :
- un module de contact, agencé pour recevoir en provenance d'une entité de confiance une réponse à une requête de connexion à un service, la réponse comprenant une donnée relative à un localisateur uniforme de ressource associé audit service et un code de connexion à usage unique et étant adressée à une adresse de contact associée à l'identifiant d'utilisateur auprès de l'entité de confiance ;
- un module de connexion, agencé pour :
   - envoyer une requête de connexion à un service, un identifiant d'un utilisateur du dispositif auprès d'une entité de confiance étant associé à ladite requête ;
   - suite à la réception de la réponse par le module de contact, envoyer une requête d'accès à une page du service dont l'adresse correspond à la donnée comprise dans la réponse, le code de connexion reçu dans la réponse étant associé à ladite requête d'accès
   - se connecter au service pour un identifiant de service associé à l'identifiant d'utilisateur auprès de l'entité de confiance, suite à une validation du code de connexion par l'entité de confiance.

Ce dispositif utilisateur peut bien sûr comporter les différentes caractéristiques relatives au procédé de connexion tel que décrit précédemment, qui peuvent être combinées ou prises isolément. Ainsi, les avantages énoncés pour le procédé de connexion selon le premier aspect sont transposables directement au dispositif utilisateur. Par conséquent, ils ne sont pas détaillés plus amplement.

Selon un troisième aspect, l'invention concerne également une entité de confiance, agencée pour autoriser une connexion d'un dispositif utilisateur à un service. Cette entité de confiance comprend :
- un module de détermination d'une réponse à une requête de connexion à un service, un identifiant d'un utilisateur du dispositif auprès de l'entité de confiance étant associé à ladite requête, ladite réponse comprenant une donnée relative à un localisateur uniforme de ressource associé audit service et un code de connexion à usage unique et étant adressée à une adresse de contact associée à l'identifiant d'utilisateur auprès de l'entité de confiance ;
- un module d'autorisation de connexion, agencé pour autoriser une connexion audit service pour un identifiant de service pour ledit service, associé à l'identifiant d'utilisateur, lorsqu'un code de connexion reçu en provenance du serveur mettant en oeuvre le service, en association avec une demande d'identifiant de service, est valide.

Cette entité de confiance peut bien sûr comporter les différentes caractéristiques relatives au procédé de connexion tel que décrit précédemment, qui peuvent être combinées ou prises isolément. Ainsi, les avantages énoncés pour le procédé de connexion selon le premier aspect sont transposables directement à l'entité de confiance. Par conséquent, ils ne sont pas détaillés plus amplement.

Selon un quatrième aspect, l'invention concerne un programme pour un dispositif utilisateur, comprenant des instructions de code de programme destinées à commander l'exécution de celles des étapes du procédé de connexion à un service précédemment décrit mises en oeuvre par le dispositif utilisateur, lorsque ce programme est exécuté par ce dispositif et un support d'enregistrement lisible par un dispositif sur lequel est enregistré un programme pour un dispositif.

Les avantages énoncés pour le procédé de connexion selon le premier aspect sont transposables directement au programme pour un dispositif utilisateur et au support d'enregistrement.

Selon un cinquième aspect, l'invention concerne un programme pour une entité de confiance, comprenant des instructions de code de programme destinées à commander l'exécution de celles des étapes du procédé de connexion à un service précédemment décrit mises en oeuvre par l'entité de confiance, lorsque ce programme est exécuté par cette entité et un support d'enregistrement lisible par une entité de confiance sur lequel est enregistré un programme pour une entité.

Les avantages énoncés pour le procédé de connexion selon le premier aspect sont transposables directement au programme pour une entité de confiance et au support d'enregistrement.

La technique de connexion à un service sera mieux comprise à l'aide de la description suivante de modes de réalisation particuliers, en référence aux dessins annexés sur lesquels :
- la figure 1 représente un environnement dans lequel est mis en oeuvre le procédé de connexion à un service dans un mode de réalisation particulier ;
- les figures 2 et 3 illustrent des étapes d'un procédé de connexion à un service mises en oeuvre par un dispositif utilisateur selon des modes particuliers de réalisation ;
- la figure 4 représente un dispositif utilisateur selon un mode particulier de réalisation ;
- la figure 5 représente une entité de confiance selon un mode particulier de réalisation.

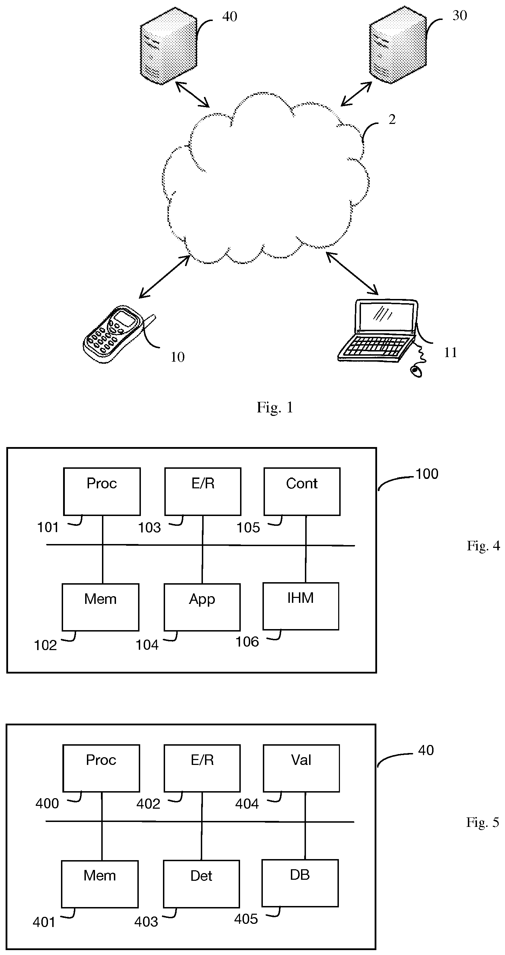

La **figure 1** représente un environnement dans lequel est mis en oeuvre le procédé de connexion à un service dans un mode de réalisation particulier.

Sur la figure 1 sont représentés deux dispositifs utilisateur accédant à un service par l'intermédiaire d'un réseau de communication 2. L'un d'entre eux 10 est un terminal mobile connecté au réseau de communication 2 par l'intermédiaire d'un réseau d'accès sans fil, tel qu'un réseau mobile GSM, UMTS, LTE, ... Le deuxième dispositif utilisateur 11 est un ordinateur portable connecté au réseau de communication 2 par l'intermédiaire d'un réseau d'accès, par exemple filaire.

Le réseau de communication 2 permet notamment d'accéder à un serveur 30 mettant en oeuvre un service. Le service requiert une identification de l'utilisateur. Le service est par exemple un service accessible sur la toile d'araignée mondiale WWW (pour « World Wide Web »), communément appelée le Web ou la Toile, via des échanges hypertexte. Le Web permet de consulter, avec un navigateur, des pages accessibles sur un site, par exemple hébergé sur le serveur 30. Le service peut également être un service mobile.

Une entité de confiance 40 est également connectée au réseau de communication 2. Dans un mode de réalisation particulier, l'entité de confiance 40 est administrée par l'opérateur du réseau. L'entité de confiance 40 est agencée pour authentifier de manière unique un utilisateur lorsqu'il souhaite se connecter à un service pour un ensemble de services mettant en oeuvre la technique de connexion. Un tel type d'authentification unique est connu sous le nom de SSO, pour « Single Sign-On » et permet notamment de simplifier pour un utilisateur la connexion à ses services en une seule opération d'authentification.

L'utilisateur du dispositif est enregistré auprès de l'entité de confiance 40. Il est identifié par un identifiant d'utilisateur unique ID_U. A cet identifiant d'utilisateur sont associés :
- une adresse de contact ;
- pour chaque service un identifiant de service ID_S.

L'identifiant d'utilisateur ID_U correspond par exemple à un identifiant d'un abonnement dans un réseau mobile, typiquement le MSISDN (pour « Mobile Station Integrated Services Digital Network Number »). Cet identifiant est le numéro connu du public d'identification de l'utilisateur dans le réseau mobile. C'est cet identifiant, couramment appelé numéro de téléphone, qui doit être composé afin de joindre l'utilisateur ayant souscrit à un abonnement.

L'adresse de contact correspond à une adresse à laquelle va être adressée une réponse à une requête de connexion à un service. Dans un mode de réalisation particulier, il s'agit de l'identifiant d'un abonnement MSISDN dans le réseau mobile. Dans un autre mode de réalisation particulier, il s'agit d'une adresse mail appartenant à l'utilisateur. En cas d'une utilisation frauduleuse par un tiers de l'adresse de contact, l'utilisateur peut alors intervenir auprès de son opérateur de réseau ou de messagerie, afin d'invalider cette adresse de contact. A titre d'exemple, lorsque le dispositif utilisateur est un terminal mobile, la déclaration effectuée auprès de son opérateur permet de bloquer l'envoi de la réponse si une connexion au service est tentée.

L'identifiant de service ID_S correspond à un identifiant sous lequel l'utilisateur se connecte au service. L'identifiant de service peut être identique à l'identifiant d'utilisateur ou bien à l'adresse de contact. Aucune limitation n'est attachée à la manière dont est défini l'identifiant de service.

La réponse à une requête de connexion à un service comprend une donnée relative à un localisateur uniforme de ressource associé à ce service et un code de connexion à usage unique. La donnée relative à un localisateur uniforme de ressource correspond à une URL (pour « Uniform Ressource Locator »), codée sous la forme d'un schéma d'URL (« URL scheme » en anglais). Une URL est une chaîne de caractères combinant les informations nécessaires pour indiquer à un logiciel comment accéder à une ressource Internet. Ces informations peuvent notamment comprendre le protocole de communication, un nom d'utilisateur, un mot de passe, une adresse IP ou un nom de domaine, un numéro de port TCP/IP, un chemin d'accès, une requête.

Le code de connexion est unique et généré pour l'utilisateur et pour le service par l'entité de confiance 40. A titre d'exemple illustratif, le code de connexion correspond au résultat d'une fonction de hachage paramétrée par une clé secrète associée au service, appliquée à l'identifiant d'utilisateur. Aucune limitation n'est attachée à cet exemple illustratif, la seule contrainte étant que ce code de connexion permette d'identifier de manière certaine l'utilisateur et le service. Ce code de connexion est à usage unique, c'est-à-dire que l'entité de confiance 40 n'autorise qu'une seule connexion au service avec ce code. Dans un mode de réalisation, une durée de validité est associée au code de connexion. Lorsque le code de connexion est reçu après l'expiration de la durée de validité, la connexion au service n'est pas autorisée.

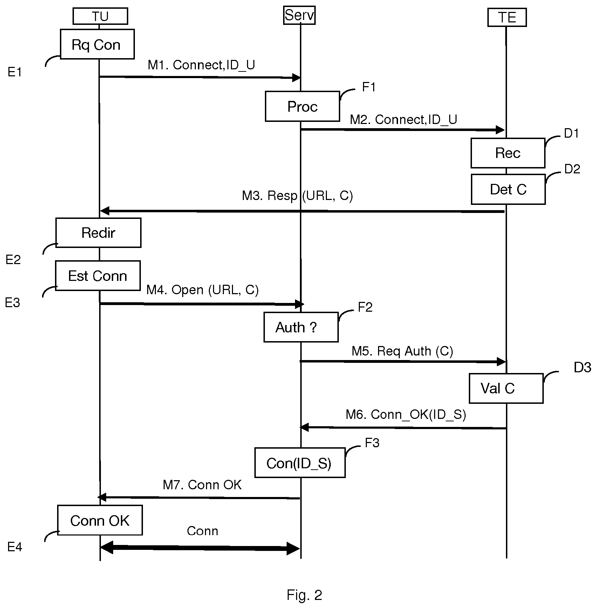

La **figure 2** illustre des étapes d'un procédé de connexion à un service mises en oeuvre par un dispositif utilisateur 10 (noté « TU » sur la figure 2) selon un premier mode particulier de réalisation.

Dans ce premier mode de réalisation, le dispositif utilisateur est un terminal mobile 10. L'utilisateur est enregistré auprès de l'entité de confiance 40 (notée « TE » sur la figure 2) et son identifiant d'utilisateur est son numéro MSISDN. L'adresse de contact correspond à l'identifiant d'utilisateur.

L'utilisateur demande par l'intermédiaire d'une interface homme-machine 106 du dispositif utilisateur 10 une connexion au service fourni par le serveur 30 (noté « Serv » sur la figure 2). Plus précisément, cette demande de connexion s'effectue par l'intermédiaire d'éléments d'un site Web ou d'une application qui s'affiche sur un écran et avec lesquels l'utilisateur peut interagir (application « Front End »).

Dans une étape d'envoi E1, le dispositif utilisateur 10 envoie une requête de connexion M1 au serveur 30, hébergeant le service (application « Back End »). Les échanges entre le dispositif utilisateur 10 et le serveur 30 s'effectuent conformément au protocole HTTP (pour « Hypertext Transfer Protocol »). Un identifiant d'utilisateur ID_U du dispositif 10 auprès d'une entité de confiance est associé à cette requête. Cet identifiant ID_U peut être renseigné par l'utilisateur à chaque requête de connexion ou bien peut être ajouté automatiquement par configuration à la requête de connexion. On rappelle que dans cet exemple particulier de réalisation, l'identifiant ID_U correspond au numéro MSISDN associé à l'utilisateur.

Dans une étape de réception F1, le serveur 30 reçoit le message M1 comprenant la requête de connexion et l'identifiant d'utilisateur et retransmet ce message M1 dans un message M2 à l'entité de confiance 40.

L'entité de confiance 40 reçoit dans une étape D1 le message M2, plus précisément la requête de connexion au service en provenance du dispositif utilisateur 10 et l'identifiant d'utilisateur ID_U auprès de l'entité de confiance.

Dans une étape D2, l'entité de confiance 40 génère un code de connexion en fonction de l'identifiant d'utilisateur et du service. Ce code de connexion est à usage unique, c'est-à-dire qu'il ne peut être présenté qu'une seule fois par l'utilisateur pour se connecter au service. Ainsi, ce code ne peut pas être réutilisé ou transféré à un autre dispositif utilisateur. En cas de vol ou de perte du dispositif utilisateur, il n'est pas possible à un autre utilisateur de réutiliser le code de connexion pour se connecter au service. L'entité de confiance 40 mémorise pour le code de connexion généré l'identifiant d'utilisateur et le service associés. Toujours dans cette étape D2, l'entité de confiance 40 accède aux données associées à l'identifiant d'utilisateur, notamment l'adresse de contact, et envoie au dispositif utilisateur 10 à l'adresse de contact une réponse M3 à la requête de connexion au service. On rappelle que dans cet exemple de réalisation, l'adresse de contact correspond à l'identifiant d'utilisateur. Plus précisément, la réponse comprend une donnée relative à un localisateur uniforme de ressource associé au service (lien « Web ») et le code de connexion. Elle est transmise sous la forme d'un message court SMS (pour « Short Message Service ») adressé à l'adresse de contact, c'est-à-dire le numéro MSISDN. Ce message court invite l'utilisateur à cliquer sur la donnée relative à un localisateur uniforme.

La réponse est reçue par le dispositif utilisateur 10 dans une étape E2.

L'action effectuée par l'utilisateur, c'est-à-dire l'appui (ou clic) via l'interface homme-machine 106 sur la donnée, déclenche dans une étape E3 un envoi par le dispositif utilisateur 10 d'une requête d'accès M4 à une page du service, dont l'adresse correspond à la donnée, hébergée sur le serveur 30. Le code de connexion reçu à l'étape E2 est associé par le dispositif utilisateur 10 à la requête d'accès M4.

La requête d'accès M4 est reçue par le serveur 30 dans une étape F2. Toujours dans cette étape F2, le serveur 30 envoie à l'entité de confiance 40 une demande M5 d'identifiant de service comprenant le code de connexion reçu du dispositif utilisateur 10, pour vérifier que l'utilisateur est bien autorisé à accéder au service et pour obtenir l'identifiant de service pour cet utilisateur.

Cette demande M5 d'identifiant de service est reçue par l'entité de confiance 40 dans une étape D3. Toujours dans cette étape D3, l'entité de confiance 40 vérifie que le code de connexion reçu est valide, c'est-à-dire qu'il n'a pas déjà été reçu, et obtient l'identifiant d'utilisateur ID_U et le service associés au code de connexion et ainsi l'identifiant de service ID_S associé à l'identifiant d'utilisateur auprès de l'entité de confiance.

Lorsque le code de connexion est valide, l'entité de confiance 40 transmet au serveur 30 une autorisation de connexion au service M6 pour l'identifiant de service. Lorsque le code de connexion n'est pas valide, l'entité de confiance 40 transmet au serveur 30 un refus de connexion. L'utilisateur du dispositif en est alors informé.

On se place par la suite dans le cas d'une autorisation de connexion. L'autorisation de connexion au service M6 est reçue dans une étape F3 par le serveur 30, lequel transmet à son tour une confirmation de connexion M7 au dispositif utilisateur 10. Le dispositif utilisateur 10 est alors connecté (étape E4) au service pour l'identifiant de service ID_S associé à l'identifiant d'utilisateur ID_U auprès de l'entité de confiance 40. La connexion reste active tant que l'utilisateur ne déconnecte pas du service le dispositif utilisateur 10. Une fois déconnecté, pour se connecter de nouveau, le code de connexion étant à usage unique, les différentes étapes décrites précédemment sont une nouvelle fois mises en oeuvre.

On constate ainsi que du point de vue de l'utilisateur, le parcours pour se connecter au service est très simple à mettre en oeuvre. Il lui suffit d'envoyer une demande de connexion au service, sans mot de passe, et de cliquer ensuite sur un lien qui le redirige vers une page du service (site web ou application mobile). Le code de connexion permet ensuite de le connecter.

Ainsi, l'utilisateur ne doit pas mémoriser pour chaque service un mot de passe. L'accès s'effectue au moyen d'un dispositif utilisateur authentifié par son opérateur de réseau. Il n'y a pas d'ambigüité sur l'identité de l'utilisateur. Le dispositif utilisateur joue ainsi un rôle d'élément de sécurité (ou « Secure Element » en anglais) et apporte une sécurisation du procédé de connexion.

Lorsque l'entité de confiance est elle-même administrée par l'opérateur auprès duquel l'utilisateur a souscrit son abonnement, l'utilisateur a la garantie qu'il n'est plus possible de se connecter au service, une fois la perte ou le vol de son dispositif utilisateur déclarés auprès de l'opérateur. En effet, l'opérateur peut mettre à jour immédiatement l'entité de confiance afin de bloquer une connexion avec l'identifiant d'utilisateur correspondant.

Ce mode de réalisation particulier a été décrit pour un identifiant d'utilisateur et une adresse de contact identiques, le numéro MSISDN de l'utilisateur. Aucune limitation n'est attachée à ce mode de réalisation particulier. L'identifiant d'utilisateur peut correspondre à un alias défini par l'utilisateur, à une adresse de courrier électronique associée à l'utilisateur, ...

Dans un mode de réalisation particulier, une durée de validité est associée au code de connexion généré à l'étape D2. A l'étape D3, lors de la vérification de la validité du code, l'entité de confiance 40 vérifie que le code est toujours valide, c'est-à-dire que la durée de validité n'a pas expiré. Ceci permet de superviser la connexion effective du dispositif utilisateur et d'améliorer encore la sécurisation du procédé de connexion.

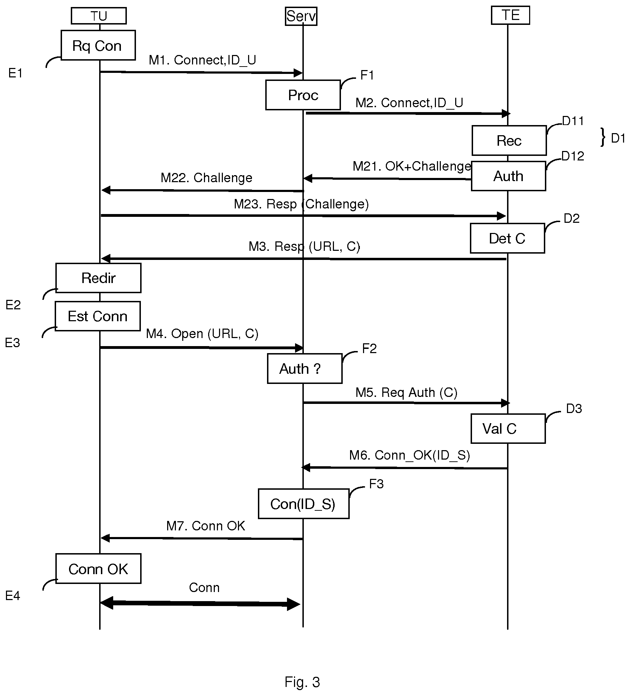

La **figure 3** illustre des étapes d'un procédé de connexion à un service mises en oeuvre par un dispositif utilisateur 11 (noté « TU » sur la figure 3) selon un deuxième mode particulier de réalisation.

Dans ce deuxième mode de réalisation, le dispositif utilisateur est un ordinateur portable 11. L'utilisateur est enregistré auprès de l'entité de confiance 40 (notée « TE » sur la figure 3) et son identifiant d'utilisateur est son numéro MSISDN. L'adresse de contact correspond à une adresse de courrier électronique (« mail » en anglais) de l'utilisateur.

L'utilisateur demande par l'intermédiaire du dispositif utilisateur 11 une connexion au service fourni par le serveur 30 (noté « Serv » sur la figure 3). Plus précisément, cette demande de connexion s'effectue par l'intermédiaire d'éléments d'un site Web qui s'affiche sur un écran et avec lesquels l'utilisateur peut interagir (application « Front End »). Les échanges entre le dispositif utilisateur 11 et le serveur 30 s'effectuent conformément au protocole HTTP.

Dans une étape d'envoi E1, le dispositif utilisateur 11 envoie une requête de connexion M1 au serveur 30, hébergeant le service (application « Back End »). Un identifiant d'utilisateur ID_U du dispositif 11 auprès d'une entité de confiance est associé à cette requête. Cet identifiant ID_U peut être renseigné par l'utilisateur à chaque requête de connexion ou bien peut être ajouté automatiquement par configuration à la requête de connexion. On rappelle que dans cet exemple particulier de réalisation, l'identifiant ID_U correspond au numéro MSISDN associé à l'utilisateur.

Dans une étape de réception F1, le serveur 30 reçoit le message M1 comprenant la requête de connexion et l'identifiant d'utilisateur et retransmet ce message M1 dans un message M2 à l'entité de confiance 40.

L'entité de confiance 40 reçoit dans une sous-étape D11 d'une étape D1 le message M2, plus précisément la requête de connexion au service en provenance du dispositif utilisateur 11 et l'identifiant d'utilisateur ID_U auprès de l'entité de confiance.

Dans une sous-étape D12 de l'étape D1, par un message M21, l'entité de confiance 40 confirme la réception du message de requête de connexion et transmet un challenge au serveur 30 à destination du dispositif utilisateur 11. Le challenge correspond à une clé aléatoire et comprend une donnée relative à un localisateur uniforme de ressource associé à l'entité de confiance 40 (ou URL de l'entité de confiance).

Le serveur 30 transmet au dispositif utilisateur 11 un message M22 comprenant le challenge. Le dispositif utilisateur 11 est redirigé vers l'entité de confiance 40 et envoie en réponse un message M23 le challenge. Ces échanges s'effectuent de manière transparente pour l'utilisateur.

Dans une étape D2, l'entité de confiance 40 reçoit la réponse d'authentification M23 et lorsque cette authentification est positive, génère un code de connexion à usage unique en fonction de l'identifiant d'utilisateur et du service. L'entité de confiance 40 mémorise pour le code de connexion généré l'identifiant d'utilisateur et le service associés. Toujours dans cette étape D2, l'entité de confiance 40 accède aux données associées à l'identifiant d'utilisateur, notamment l'adresse de contact, et envoie au dispositif utilisateur 11 à l'adresse de contact une réponse M3 à la requête de connexion au service. On rappelle que dans cet exemple de réalisation, l'adresse de contact correspond à une adresse mail de l'utilisateur. Plus précisément, la réponse comprend une donnée relative à un localisateur uniforme de ressource associé au service (lien « web ») et le code de connexion. Elle est transmise sous la forme d'un courrier électronique adressé à l'adresse de contact, c'est-à-dire une adresse mail de l'utilisateur. Ce courrier électronique invite l'utilisateur à cliquer sur la donnée relative à un localisateur uniforme.

La réponse est reçue par le dispositif utilisateur 11 dans une étape E2.

L'action effectuée par l'utilisateur, c'est-à-dire l'appui via l'interface homme-machine sur la donnée, déclenche dans une étape E3 un envoi par le dispositif utilisateur 11 d'une requête d'accès M4 à une page du service dont l'adresse correspond à la donnée, hébergée sur le serveur 30. Le code de connexion reçu à l'étape E2 est associé par le dispositif utilisateur 11 à la requête d'accès M4.

La requête d'accès M4 est reçue par le serveur 30 dans une étape F2. Toujours dans cette étape F2, le serveur 30 envoie à l'entité de confiance 40 une demande M5 d'identifiant de service comprenant le code de connexion reçu du dispositif utilisateur 11, pour vérifier que l'utilisateur est bien autorisé à accéder au service et pour obtenir l'identifiant de service pour cet utilisateur.

Cette demande M5 d'identifiant de service est reçue par l'entité de confiance 40 dans une étape D3. Toujours dans cette étape D3, l'entité de confiance 40 vérifie que le code de connexion reçu est valide, c'est-à-dire qu'il n'a pas déjà été reçu, et détermine l'identifiant d'utilisateur associé au code de connexion et ainsi l'identifiant de service ID_S associé à l'identifiant d'utilisateur ID_U auprès de l'entité de confiance. Lorsque le code de connexion est valide, l'entité de confiance 40 transmet au serveur 30 une autorisation de connexion au service pour l'identifiant de service. Lorsque le code de connexion n'est pas valide, l'entité de confiance 40 transmet au serveur 30 un refus de connexion.

On se place dans le cas d'une autorisation de connexion. Celle-ci est reçue dans une étape F3 par le serveur 30, lequel transmet à son tour une confirmation de connexion M7 au dispositif utilisateur 10. Le dispositif utilisateur 11 est alors connecté (étape E4) au service pour l'identifiant de service ID_S associé à l'identifiant d'utilisateur ID_U auprès de l'entité de confiance 40. La connexion reste active tant que l'utilisateur ne déconnecte pas du service le dispositif utilisateur 11. Une fois déconnecté, le code de connexion étant à usage unique, les différentes étapes décrites précédemment sont de nouveau mises en oeuvre.

On constate ainsi que du point de vue de l'utilisateur, de même que pour le premier mode de réalisation, le parcours pour se connecter au service est très simple à mettre en oeuvre. Il lui suffit d'envoyer une demande de connexion au service, sans mot de passe, et de cliquer ensuite sur un lien vers une page du service. L'utilisateur ne doit pas mémoriser pour chaque service un mot de passe. Le dispositif utilisateur est mis en relation avec l'entité de confiance pour apporter une sécurisation du procédé de connexion.

De même que décrit pour le premier mode de réalisation, une durée de validité peut être définie pour le code de connexion généré.

Ainsi, le procédé de connexion permet de simplifier la connexion à un service en requérant uniquement une adresse de contact, numéro de téléphone mobile ou courrier électronique. Aucun mot de passe n'est demandé.

La **figure 4** représente un dispositif utilisateur 100 dans un mode particulier de réalisation. Le dispositif utilisateur 100 comprend notamment :
- une zone mémoire 102, agencée pour mémoriser une application qui comprend des instructions de code pour mettre en oeuvre les étapes du procédé de connexion ;
- une mémoire de stockage, non représentée, agencée pour stocker des données utilisées lors de la mise en oeuvre du procédé de connexion ;
- un processeur 101 pour exécuter des instructions de code de modules logiciels ;
- un module d'interface 103 avec un réseau de communication, agencé pour émettre et recevoir des données ;
- un module de connexion 104 à un service ;
- un module de contact 105, agencé pour recevoir en provenance d'une entité de confiance une réponse à une requête de connexion à un service, la réponse comprenant une donnée relative à un localisateur uniforme de ressource associé audit service et un code de connexion à usage unique.
- un module d'interface-homme machine 106, agencé pour interagir avec un utilisateur.

Le module de connexion 104 est notamment agencé pour :
- envoyer une requête de connexion à un service 30, un identifiant d'un utilisateur du dispositif auprès d'une entité de confiance 40 étant associé à ladite requête ;
- suite à la réception de la réponse par le module de contact 105, envoyer une requête d'accès à une page du service dont l'adresse correspond à la donnée comprise dans la réponse, le code de connexion reçu dans la réponse étant associé à ladite requête d'accès ;
- se connecter au service pour un identifiant de service associé à l'identifiant d'utilisateur auprès de l'entité de confiance, suite à une validation du code de connexion par l'entité de confiance.

Dans un mode de réalisation particulier, la réponse est adressée à une adresse de contact associée à l'identifiant d'utilisateur auprès de l'entité de confiance et le module de contact 105 est agencé pour recevoir une réponse adressée à cette adresse de contact.

Le module de contact 105 correspond dans un mode de réalisation particulier à un module d'envoi et de réception de messages courts. Dans un autre mode de réalisation, le module de contact 105 correspond à un module d'envoi et de réception de courrier électronique.

Il est ici souligné que le dispositif utilisateur 100 comprend également d'autres modules de traitement, non représentés sur la figure 4, agencés pour mettre en oeuvre les différentes fonctions de dispositif utilisateur.

La **figure 5** représente une entité de confiance 40 dans un mode particulier de réalisation. L'entité de confiance 40 est agencée pour autoriser une connexion d'un dispositif utilisateur 10, 11 à un service 30 et comprend notamment :
- une zone mémoire 401, agencée pour mémoriser une application qui comprend des instructions de code pour mettre en oeuvre les étapes du procédé de connexion ;
- une mémoire de stockage, non représentée, agencée pour stocker des données utilisées lors de la mise en oeuvre du procédé de connexion ;
- un processeur 400 pour exécuter des instructions de code de modules logiciels ;
- un module d'interface 402 avec un réseau de communication, agencé pour émettre et recevoir des données ;
- une base de données 405, agencée pour mémoriser, pour un identifiant utilisateur, un ou des identifiants de service pour un ou des services ;
- un module de détermination 403, agencé pour déterminer une réponse à une requête de connexion à un service, un identifiant d'un utilisateur d'un dispositif utilisateur auprès de l'entité de confiance étant associé à ladite requête, ladite réponse comprenant une donnée relative à un localisateur uniforme de ressource associé audit service et un code de connexion à usage unique ;
- un module d'autorisation de connexion 404, agencé pour autoriser une connexion audit service pour un identifiant de service pour ledit service, associé à l'identifiant d'utilisateur, lorsqu'un code de connexion reçu en provenance du serveur mettant en oeuvre le service, en association avec une demande d'identifiant de service, est valide, et dans le cas contraire pour rejeter la connexion.

Le module de détermination 403 est notamment agencé pour générer un code de connexion pour l'identifiant d'utilisateur et le service.

Dans un mode de réalisation particulier, le module de détermination 403 est agencé pour adresser la réponse à une adresse de contact associée à l'identifiant d'utilisateur auprès de l'entité de confiance.

Il est ici souligné que l'entité de confiance 40 comprend également d'autres modules de traitement, non représentés sur la figure 5, agencés pour mettre en oeuvre les différentes fonctions d'entité de confiance.

Aucune limitation n'est attachée à ces différents modes de réalisation et l'homme du métier est à même d'en définir d'autres en redirigeant le dispositif utilisateur vers une page du service, pour laquelle la connexion est autorisée en fonction de la validité d'un code de connexion .

La technique de connexion est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en oeuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 104, 105 sont agencés pour mettre en oeuvre le procédé de connexion précédemment décrit. Il s'agit de préférence de modules logiciels comprenant des instructions logicielles pour faire exécuter celles des étapes du procédé de connexion précédemment décrit, mises en oeuvre par un dispositif utilisateur. L'invention concerne donc aussi :
- un programme pour un dispositif utilisateur, comprenant des instructions de code de programme destinées à commander l'exécution des étapes du procédé de connexion précédemment décrit, lorsque ledit programme est exécuté par ce dispositif utilisateur ;
- un support d'enregistrement lisible par un dispositif utilisateur sur lequel est enregistré le programme pour un dispositif.

Dans un mode de réalisation particulier, les modules 403, 404 sont agencés pour mettre en oeuvre le procédé de connexion précédemment décrit. Il s'agit de préférence de modules logiciels comprenant des instructions logicielles pour faire exécuter celles des étapes du procédé de connexion précédemment décrit, mises en oeuvre par une entité de confiance. L'invention concerne donc aussi :
- un programme pour une entité de confiance, comprenant des instructions de code de programme destinées à commander l'exécution des étapes du procédé de connexion précédemment décrit, lorsque ledit programme est exécuté par cette entité de confiance ;
- un support d'enregistrement lisible par une entité de confiance sur lequel est enregistré le programme pour une entité.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

## Revendications

1. Procédé de connexion à un service d'un dispositif utilisateur (10, 11), ledit procédé comprenant :
- un enregistrement d'un utilisateur auprès d'une entité de confiance (40), au cours duquel une adresse de contact et un identifiant de service sont associés à un identifiant d'utilisateur et mémorisés par l'entité de confiance en association pour un accès ultérieur ;
- après enregistrement, un envoi (E1) par le dispositif à un serveur (30) mettant en oeuvre le service d'une requête de connexion audit service, l'identifiant d'utilisateur auprès de l'entité de confiance étant associé à ladite requête ;
- une réception (E2) par ledit dispositif en provenance de l'entité de confiance d'une réponse à ladite requête, ladite réponse comprenant une donnée relative à un localisateur uniforme de ressource associé audit service et un code de connexion à usage unique et étant adressée à l'adresse de contact associée à l'identifiant d'utilisateur auprès de l'entité de confiance lors de l'enregistrement de l'utilisateur, l'entité de confiance mémorisant en association avec le code de connexion, l'identifiant d'utilisateur et le service ;
- un envoi (E3) par ledit dispositif d'une requête d'accès à une page du service dont l'adresse correspond à ladite donnée, le code de connexion reçu étant associé à ladite requête d'accès ;
- une connexion (E4) audit service pour l'identifiant de service associé à l'identifiant d'utilisateur auprès de l'entité de confiance, suite à une validation du code de connexion par l'entité de confiance, l'identifiant d'utilisateur correspondant à celui mémorisé par l'entité de confiance en association avec le code de connexion.

2. Procédé de connexion selon la revendication 1, dans lequel l'adresse de contact est un numéro de téléphone permettant de joindre un utilisateur du dispositif.

3. Procédé de connexion selon la revendication 1, dans lequel l'adresse de contact est une adresse de courrier électronique associée à l'utilisateur du dispositif.

4. Procédé de connexion à un service d'un dispositif utilisateur (10, 11), ledit procédé comprenant :
- un enregistrement d'un utilisateur auprès d'une entité de confiance (40), au cours duquel une adresse de contact et un identifiant de service sont associés à un identifiant d'utilisateur et mémorisés par l'entité de confiance en association pour un accès ultérieur ;
- après enregistrement, une réception (D1) par l'entité de confiance d'une requête de connexion audit service en provenance du dispositif et retransmise par un serveur (30) mettant en oeuvre le service, l'identifiant d'utilisateur auprès de l'entité de confiance étant associé à ladite requête ;
- un envoi (D2) au dispositif par l'entité de confiance d'une réponse à ladite requête, ladite réponse comprenant une donnée relative à un localisateur uniforme de ressource associé audit service et un code de connexion à usage unique et étant adressée à l'adresse de contact associée à l'identifiant d'utilisateur auprès de l'entité de confiance lors de l'enregistrement de l'utilisateur, l'entité de confiance mémorisant en association avec le code de connexion, l'identifiant d'utilisateur et le service;
- une autorisation de connexion (D3) audit service pour l'identifiant de service mémorisé en association avec l'identifiant d'utilisateur par l'entité de confiance, l'identifiant d'utilisateur correspondant à celui mémorisé par l'entité de confiance en association avec le code de connexion, lorsqu'un code de connexion reçu, par l'entité de confiance en provenance du serveur (30), en association avec une demande d'identifiant de service, est valide.

5. Entité de confiance (40), agencée pour autoriser une connexion d'un dispositif utilisateur (10, 11) à un service (30) ,
ladite entité de confiance comprenant :
- un module pour enregistrer un utilisateur, en associant une adresse de contact et un identifiant de service à un identifiant d'utilisateur, et mémoriser l'adresse de contact, l'identifiant de service et l'identifiant d'utilisateur en association pour un accès ultérieur ;
- un module de réception (402), agencé pour recevoir, après enregistrement de l'utilisateur, une requête de connexion audit service en provenance du dispositif utilisateur et retransmise par un serveur (30) mettant en oeuvre le service, l'identifiant d'utilisateur auprès de l'entité de confiance étant associé à ladite requête ;
- un module de détermination (403) d'une réponse à la requête de connexion à un service pour un utilisateur enregistré et d'envoi de ladite réponse au dispositif, ladite réponse comprenant une donnée relative à un localisateur uniforme de ressource associé audit service et un code de connexion à usage unique et étant adressée à l'adresse de contact associée à l'identifiant d'utilisateur auprès de l'entité de confiance lors de l'enregistrement de l'utilisateur, l'entité de confiance mémorisant en association avec le code de connexion, l'identifiant utilisateur et le service;
- un module d'autorisation de connexion (404), agencé pour autoriser une connexion audit service pour l'identifiant de service pour ledit service mémorisé en association à l'identifiant d'utilisateur par l'entité de confiance, l'identifiant d'utilisateur correspondant à celui mémorisé par l'entité de confiance en association avec le code de connexion, lorsqu'un code de connexion reçu en provenance du serveur mettant en oeuvre le service, en association avec une demande d'identifiant de service, est valide.

6. Système comprenant une entité de confiance selon la revendication 5 et un dispositif utilisateur, ledit dispositif comprenant :
- un module de contact (105), agencé pour recevoir en provenance d'une entité de confiance (40) une réponse à une requête de connexion à un service (30), la réponse comprenant une donnée relative à un localisateur uniforme de ressource associé audit service et un code de connexion à usage unique et étant adressée à l'adresse de contact associée à l'identifiant d'utilisateur auprès de l'entité de confiance lors de l'enregistrement de l'utilisateur ;
- un module de connexion (104), agencé pour :
- envoyer une requête de connexion à un service à un serveur mettant en oeuvre le service, l'identifiant d'utilisateur auprès d'une entité de confiance étant associé à ladite requête ;
- suite à la réception de la réponse par le module de contact, envoyer une requête d'accès à une page du service dont l'adresse correspond à la donnée comprise dans la réponse, le code de connexion reçu dans la réponse étant associé à ladite requête d'accès
- se connecter au service pour l'identifiant de service associé à l'identifiant d'utilisateur auprès de l'entité de confiance.

7. Programme comprenant des instructions de code de programme destinées à commander l'exécution de celles des étapes du procédé de connexion à un service selon l'une des revendications 1 à 3 mises en oeuvre par un dispositif utilisateur et une entité de confiance, lorsque ledit programme est exécuté parledit dispositif utilisateur et ladite entité de confiance.

8. Support d'enregistrement sur lequel est enregistré le programme selon la revendication 7.

9. Programme pour une entité de confiance, comprenant des instructions de code de programme destinées à commander l'exécution du procédé de connexion à un service selon la revendication 4, lorsque ledit programme est exécuté par l'entité de confiance.

10. Support d'enregistrement lisible par une entité de confiance sur lequel est enregistré le programme selon la revendication 9.

## Patentansprüche

1. Verfahren zur Verbindung einer Benutzervorrichtung (10, 11) mit einem Dienst, wobei das Verfahren enthält:
- eine Registrierung eines Benutzers bei einer vertrauenswürdigen Instanz (40), während der eine Kontaktadresse und eine Dienstkennung einer Benutzerkennung zugeordnet und von der vertrauenswürdigen Instanz zusammen für einen späteren Zugang gespeichert werden;
- nach der Registrierung, ein Senden (E1) eines Verbindungsantrags mit dem Dienst durch die Vorrichtung an einen den Dienst anwendenden Server (30), wobei die Benutzerkennung bei der vertrauenswürdigen Instanz dem Antrag zugeordnet ist;
- einen Empfang (E2) durch die Vorrichtung einer Antwort auf den Antrag von der vertrauenswürdigen Instanz, wobei die Antwort einen Datenwert bezüglich einer dem Dienst zugeordneten URL-Adresse und einen einmalig nutzbaren Verbindungscode enthält und an die Kontaktadresse adressiert ist, die der Benutzerkennung bei der vertrauenswürdigen Instanz bei der Registrierung des Benutzers zugeordnet wird, wobei die vertrauenswürdige Instanz die Benutzerkennung und den Dienst zusammen mit dem Verbindungscode speichert;
- ein Senden (E3) durch die Vorrichtung eines Zugangsantrags zu einer Seite des Diensts, deren Adresse dem Datenwert entspricht, wobei der empfangene Verbindungscode dem Zugangsantrag zugeordnet ist;
- eine Verbindung (E4) mit dem Dienst für die der Benutzerkennung bei der vertrauenswürdigen Instanz zugeordnete Dienstkennung nach einer Validierung des Verbindungscodes durch die vertrauenswürdige Instanz, wobei die Benutzerkennung derjenigen entspricht, die von der vertrauenswürdigen Instanz zusammen mit dem Verbindungscode gespeichert wird.

2. Verbindungsverfahren nach Anspruch 1, wobei die Kontaktadresse eine Telefonnummer ist, die es ermöglicht, einen Benutzer der Vorrichtung zu erreichen.

3. Verbindungsverfahren nach Anspruch 1, wobei die Kontaktadresse eine dem Benutzer der Vorrichtung zugeordnete E-Mail-Adresse ist.

4. Verfahren zur Verbindung einer Benutzervorrichtung (10, 11) mit einem Dienst, wobei das Verfahren enthält:
- eine Registrierung eines Benutzers bei einer vertrauenswürdigen Instanz (40), während der eine Kontaktadresse und eine Dienstkennung einer Benutzerkennung zugeordnet und von der vertrauenswürdigen Instanz zusammen für einen späteren Zugang gespeichert werden;
- nach der Registrierung, einen Empfang (D1) durch die vertrauenswürdige Instanz eines Verbindungsantrags mit dem Dienst von der Vorrichtung und weitergeleitet durch einen den Dienst anwendenden Server (30), wobei die Benutzerkennung bei der vertrauenswürdigen Instanz dem Antrag zugeordnet wird;
- ein Senden (D2) einer Antwort auf den Antrag an die Vorrichtung durch die vertrauenswürdige Instanz, wobei die Antwort einen Datenwert bezüglich einer dem Dienst zugeordneten URL-Adresse und einen einmalig nutzbaren Verbindungscode enthält und an die Kontaktadresse adressiert ist, die der Benutzerkennung bei der vertrauenswürdigen Instanz bei der Registrierung des Benutzers zugeordnet wird, wobei die vertrauenswürdige Instanz die Benutzerkennung und den Dienst zusammen mit dem Verbindungscode speichert;
- eine Verbindungsgenehmigung (D3) mit dem Dienst für die zusammen mit der Benutzerkennung von der vertrauenswürdigen Instanz gespeicherte Dienstkennung, wobei die Benutzerkennung derjenigen entspricht, die von der vertrauenswürdigen Instanz zusammen mit dem Verbindungscode gespeichert wird, wenn ein vom Server (30) kommender, von der vertrauenswürdigen Instanz empfangener Verbindungscode zusammen mit einer Dienstkennungsanforderung gültig ist.

5. Vertrauenswürdige Instanz (40), eingerichtet, um eine Verbindung einer Benutzervorrichtung (10, 11) mit einem Dienst (30) zu genehmigen, wobei die vertrauenswürdige Instanz enthält:
- ein Modul zur Registrierung eines Benutzers, indem eine Kontaktadresse und eine Dienstkennung einer Benutzerkennung zugeordnet werden, und zum Speichern der Kontaktadresse, der Dienstkennung und der Benutzerkennung zusammen für einen späteren Zugang;
- ein Empfangsmodul (402), das eingerichtet ist, um nach der Registrierung des Benutzers einen Verbindungsantrag mit dem Dienst zu empfangen, der von der Benutzervorrichtung kommt und von einem den Dienst anwendenden Server (30) weitergeleitet wird, wobei die Benutzerkennung bei der vertrauenswürdigen Instanz dem Antrag zugeordnet wird;
- ein Modul zur Bestimmung (403) einer Antwort auf den Verbindungsantrag mit einem Dienst für einen registrierten Benutzer und zum Senden der Antwort an die Vorrichtung, wobei die Antwort einen Datenwert bezüglich einer dem Dienst zugeordneten URL-Adresse und einen einmalig nutzbaren Verbindungscode enthält und an die der Benutzerkennung bei der vertrauenswürdigen Instanz bei der Registrierung des Benutzers zugeordnete Kontaktadresse adressiert ist, wobei die vertrauenswürdige Instanz die Benutzerkennung und den Dienst zusammen mit dem Verbindungscode speichert;
- ein Verbindungsgenehmigungsmodul (404), das eingerichtet ist, um eine Verbindung mit dem Dienst für die Dienstkennung für den Dienst, die zusammen mit der Benutzerkennung von der vertrauenswürdigen Instanz gespeichert wird, zu genehmigen, wobei die Benutzerkennung derjenigen entspricht, die von der vertrauenswürdigen Instanz zusammen mit dem Verbindungscode gespeichert wird, wenn ein vom den Dienst anwendenden Server kommend empfangener Verbindungscode zusammen mit einer Dienstkennungsanforderung gültig ist.

6. System, das eine vertrauenswürdige Instanz nach Anspruch 5 und eine Benutzervorrichtung enthält, wobei die Vorrichtung enthält:
- ein Kontaktmodul (105), eingerichtet, um von einer vertrauenswürdigen Instanz (40) eine Antwort auf einen Verbindungsantrag mit einem Dienst (30) zu empfangen, wobei die Antwort einen Datenwert bezüglich einer dem Dienst zugeordneten URL-Adresse und einen einmalig nutzbaren Verbindungscode enthält und an die Kontaktadresse adressiert ist, die der Benutzerkennung bei der vertrauenswürdigen Instanz bei der Registrierung des Benutzers zugeordnet wird;
- ein Verbindungsmodul (104), eingerichtet, um:
- einen Verbindungsantrag mit einem Dienst an einen den Dienst anwendenden Server zu senden, wobei die Benutzerkennung bei einer vertrauenswürdigen Instanz dem Antrag zugeordnet ist;
- nach dem Empfang der Antwort vom Kontaktmodul, einen Zugangsantrag zu einer Seite des Diensts zu senden, deren Adresse dem in der Antwort enthaltenen Datenwert entspricht, wobei der in der Antwort empfangene Verbindungscode dem Zugangsantrag zugeordnet ist;
- sich mit dem Dienst für die der Benutzerkennung bei der vertrauenswürdigen Instanz zugeordnete Dienstkennung zu verbinden.

7. Programm, das Programmcodeanweisungen enthält, die dazu bestimmt sind, die Ausführung derjenigen der Schritte des Verbindungsverfahrens mit einem Dienst nach einem der Ansprüche 1 bis 3 zu steuern, die von einer Benutzervorrichtung und einer vertrauenswürdigen Instanz angewendet werden, wenn das Programm von der Benutzervorrichtung und der vertrauenswürdigen Instanz ausgeführt wird.

8. Speicherträger, auf dem das Programm nach Anspruch 7 gespeichert ist.

9. Programm für eine vertrauenswürdige Instanz, das Programmcodeanweisungen enthält, die dazu bestimmt sind, die Ausführung des Verbindungsverfahrens mit einem Dienst nach Anspruch 4 zu steuern, wenn das Programm von der vertrauenswürdigen Instanz ausgeführt wird.

10. Speicherträger, lesbar von einer vertrauenswürdigen Instanz, auf dem das Programm nach Anspruch 9 gespeichert ist.

## Claims

1. Method for connecting to a service for a user device (10, 11), said method comprising:
- registering a user with a trusted entity (40), in the course of which a contact address and a service identifier are associated with a user identifier and stored by the trusted entity in association for subsequent access;
- after registration, the device sending (E1), to a server (30) implementing the service, a request to connect to said service, the user identifier with the trusted entity being associated with said request;
- said device receiving (E2), from the trusted entity, a response to said request, said response comprising a datum in relation to a uniform resource locator associated with said service and a single-use connection code and being addressed to the contact address associated with the user identifier with the trusted entity when the user registered, the trusted entity storing, in association with the connection code, the user identifier and the service;
- said device sending (E3) a request to access a page of the service the address of which corresponds to said datum, the received connection code being associated with said access request;
- connecting (E4) to said service for the service identifier associated with the user identifier in the trusted entity, following validation of the connection code by the trusted entity, the user identifier corresponding to the one stored by the trusted entity in association with the connection code.

2. Connection method according to Claim 1, wherein the contact address is a telephone number for reaching a user of the device.

3. Connection method according to Claim 1, wherein the contact address is an email address associated with the user of the device.

4. Method for connecting to a service for a user device (10, 11), said method comprising:
- registering a user with a trusted entity (40), in the course of which a contact address and a service identifier are associated with a user identifier and stored by the trusted entity in association for subsequent access;
- after registration, the trusted entity receiving (D1) a request to connect to said service from the device and retransmitted by a server (30) implementing the service, the user identifier with the trusted entity being associated with said request;
- the trusted entity sending (D2), to the device, a response to said request, said response comprising a datum in relation to a uniform resource locator associated with said service and a single-use connection code and being addressed to the contact address associated with the user identifier in the trusted entity during the user registration, the trusted entity storing, in association with the connection code, the user identifier and the service;
- the trusted entity authorizing connection (D3) to said service for the service identifier stored in association with the user identifier, the user identifier corresponding to the one stored by the trusted entity in association with the connection code, when a connection code received by the trusted entity from the server (30) in association with a service identifier request is valid.

5. Trusted entity (40), designed to authorize connection of a user device (10, 11) to a service (30), said trusted entity comprising:
- a module for registering a user, by associating a contact address and a service identifier with a user identifier, and storing the contact address, the service identifier and the user identifier in association for subsequent access;
- a reception module (402), designed to receive, after registration of the user, a request to connect to said service from the user device and retransmitted by a server (30) implementing the service, the user identifier with the trusted entity being associated with said request;
- a module (403) for determining a response to the request to connect to a service for a registered user and for sending said response to the device, said response comprising a datum in relation to a uniform resource locator associated with said service and a single-use connection code and being addressed to the contact address associated with the user identifier in the trusted entity when the user registered, the trusted entity storing, in association with the connection code, the user identifier and the service;
- a connection authorization module (404), designed to authorize connection to said service for the service identifier for said service stored in association with the user identifier by the trusted entity, the user identifier corresponding to the one stored by the trusted entity in association with the connection code, when a connection code received from the server implementing the service in association with a service identifier request is valid.

6. System comprising a trusted entity according to Claim 5 and a user device, said device comprising:
- a contact module (105), designed to receive, from a trusted entity (40), a response to a request to connect to a service (30), the response comprising a datum in relation to a uniform resource locator associated with said service and a single-use connection code and being addressed to the contact address associated with the user identifier in the trusted entity during the user registration;
- a connection module (104), designed to:
- send a request to connect to a service to a server implementing the service, the user identifier with a trusted entity being associated with said request;
- following the receipt of the response by the contact module, send a request to access a page of the service the address of which corresponds to the datum contained in the response, the connection code received in the response being associated with said access request;
- connect to the service for the service identifier associated with the user identifier in the trusted entity.

7. Program comprising program code instructions intended to command the execution of those steps of the method for connecting to a service according to one of Claims 1 to 3 that are implemented by a user device and a trusted entity when said program is executed by said user device and said trusted entity.

8. Recording medium on which the program according to Claim 7 is recorded.

9. Program for a trusted entity, comprising program code instructions intended to command the execution of the method for connecting to a service according to Claim 4 when said program is executed by the trusted entity.

10. Recording medium able to be read by a trusted entity and on which the program according to Claim 9 is recorded.
